# EUROPÄISCHE PATENTSCHRIFT

(11) **EP 0 724 981 B1**
(45) Veröffentlichungstag und Bekanntmachung des Hinweises auf die Patenterteilung: **08.04.1998**
(21) Anmeldenummer: 96100300.1
(22) Anmeldetag: 11.01.1996
(51) Int. Cl.: B60N 3/02

(54) **Dachrahmen**
Roof frame
Cadre de toit

(30) Priorität: 02.02.1995 DE 19503219
(43) Veröffentlichungstag der Anmeldung: 07.08.1996
(73) Patentinhaber: BECKER GROUP EUROPE GmbH, 42285 Wuppertal (DE)
(72) Erfinder: Mieglitz, Hans-Helmut, D-40789 Monheim (DE); Kauka, Christof, D-42655 Solingen (DE)

(56) Entgegenhaltungen:
- EP-A- 0 445 373
- DE-B- 1 120 291
- DE-C- 883 407
- DE-C- 957 456
- GB-A- 2 023 077
- US-A- 2 768 590
- US-A- 3 182 606
- PATENT ABSTRACTS OF JAPAN vol. 009, no. 060 (M-364), 16.März 1985 & JP-A-59 195473 (HONDA GIKEN KOGYO KK), 6.November 1984,

## Beschreibung

Die Erfindung bezieht sich auf einen Dachrahmen für den Innenraumbereich von Fahrzeugen, gemäß den Merkmalen des Oberbegriffes von Anspruch 1.

Herkömmlicherweise werden bei Fahrzeugen mit gehobenem Ausstattungskomfort Dachhimmelauskleidungen mit einem umlaufenden, eine Verkleidungsfunktion übernehmenden Dachrahmen eingefaßt. An diesen Dachrahmen werden sodann Haltegriffe angesetzt und mittels Befestigungselementen durch den Dachrahmen hindurch an tragenden Karosserieteilen befestigt. Die Herstellung des Dachrahmens, der in der Regel aus mehreren aneinanderzusetzenden Rahmenelementen besteht, wie auch die separate Herstellung von daran anzusetzenden Haltegriffen ist relativ aufwendig, und zwar sowohl in bezug auf die Herstellung als auch in bezug auf die Montage.

Der Erfindung liegt die Aufgabe zugrunde, bei einem Dachrahmen die Anordnung von Haltegriffen zu vereinfachen.

Gemäß der Erfindung wird diese Aufgabe dadurch gelöst, daß der Dachrahmen aus mehreren als Kunststoff-Spritzgußteile ausgebildeten Rahmenelementen mit daran einstückig angeformten Griffkörpern besteht.

Aufgrund dieser erfindungsgemäßen Maßnahme ergibt sich eine Einsparung von separat herzustellenden und zu montierenden Haltegriffen und damit eine Reduzierung der Montage- und Fertigungsaufwendungen, und zwar vorteilhafter Weise ohne jeglichen Nutzungsverlust.

Zweckmäßige Weiterbildungen und vorteilhafte Ausgestaltungen der Erfindung sind in den Unteransprüchen angegeben.

Ausführungsbeispiele der Erfindung werden im folgenden anhand der Zeichnungen näher erläutert, und es zeigen:
- Fig. 1: einen Schnitt durch eine Rahmenschnittstelle eines Dachrahmens mit einem Haltegriff im Bereich der Rahmenschnittstelle gemäß einer ersten Ausführungsform,
- Fig. 2: eine Ansicht des Dachrahmens mit Haltegriff gemäß Pfeilrichtung II in Fig. 1,
- Fig. 3: einen Schnitt durch eine Rahmenschnittstelle eines Dachrahmens mit einem Haltegriff im Bereich der Rahmenschnittstelle gemäß einer zweiten Ausführungsform,
- Fig. 4: eine schaubildliche Ansicht einer Ausführungsform in einer Montagestellung,
- Fig. 5: den Gegenstand nach Fig. 4 nach erfolgter Montage eines kompletten Dachrahmens,
- Fig. 6: eine schaubildliche Ansicht einer weiteren Ausführungsform,
- Fig. 7: einen Schnitt folgend der Linie VII - VII nach Fig. 6 und
- Fig. 8: den Gegenstand nach Fig. 6 und 7 nach erfolgter Montage eines kompletten Dachrahmens.

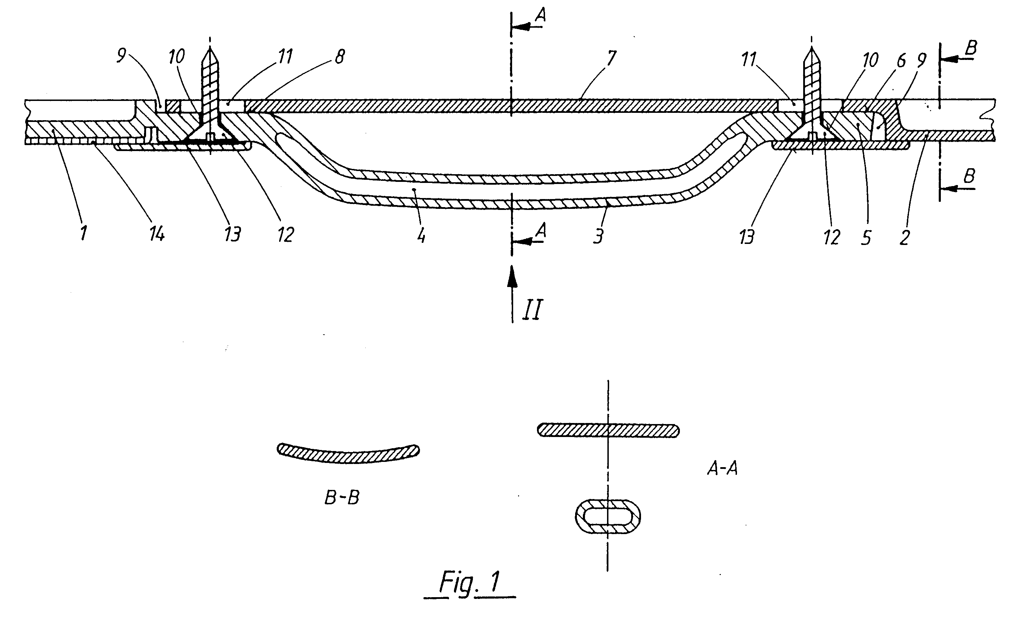

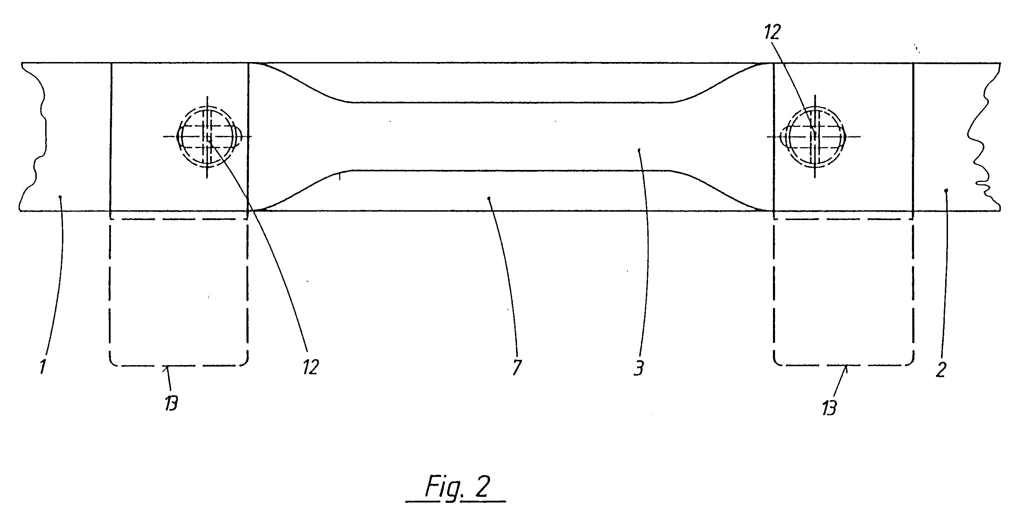

In den Fig. 1 und 2 ist ein Teilbereich eines Dachrahmens dargestellt mit einem ersten Rahmenelement 1 und einem zweiten Rahmenelement 2. Das erste Rahmenelement 1 ist einendig mit einem das zweite Rahmenelement 2 überlappenden Griffkörper 3 ausgebildet. Sowohl das erste Rahmenelement 1 mit Griffkörper 3 als auch das zweite Rahmenelement 2 ist jeweils als einstückiges Kunststoff-Spritzgußteil ausgebildet. Der Griffkörper 3 kann gemäß dem Gasinnendruckverfahren mit einem Hohlraum 4 versehen sein. Der freie Endbereich des Griffkörpers 3 weist einen Sockel 5 auf, der sich auf einer diesen aufnehmenden Vertiefung 6 am Endbereich des zweiten Rahmenelements 2 abstützt. Das zweite Rahmenelement 2 weist einen sich an den Bereich der Vertiefung 6 axial anschließenden Steg 7 auf, der den am Rahmenelement 1 angebundenen Endbereich des Griffkörpers 3, der hier mit einer Vertiefung 8 versehen ist, untergreift. Freiräume 9 zwischen dem freien Ende des Sockels 5 des Griffkörpers 3 und dem freien Ende des Stegs 7 und der jeweiligen Begrenzungswand der Vertiefungen 6 und 8 bieten die Möglichkeit eines Toleranzausgleichs.

Bohrungen 10 in den Endbereichen des Griffkörpers 3 und Langlöcher 11 im Steg 7 dienen zum Durchführen von Befestigungselementen 12. Zwecks Abdeckung der Befestigungselemente 12 sind die Rahmenelemente 1 und 2 mit Abdeckkappen 13 einstückig ausgebildet, wobei eine Anbindung über Filmscharniere vorgesehen ist. Nach der Montage werden die Abdeckkappen 13 über die Befestigungsstellen geklappt und durch angeformte Verhakungselemente, die im einzelnen nicht dargestellt sind, an den Rahmenelementen 1 und 2 gehalten. Gewünschtenfalls können die Rahmenelemente 1 und 2 auch mit einer Kaschierung 14 versehen sein, deren Auslauf/Umbug von den Abdeckkappen 13 mit abgedeckt wird.

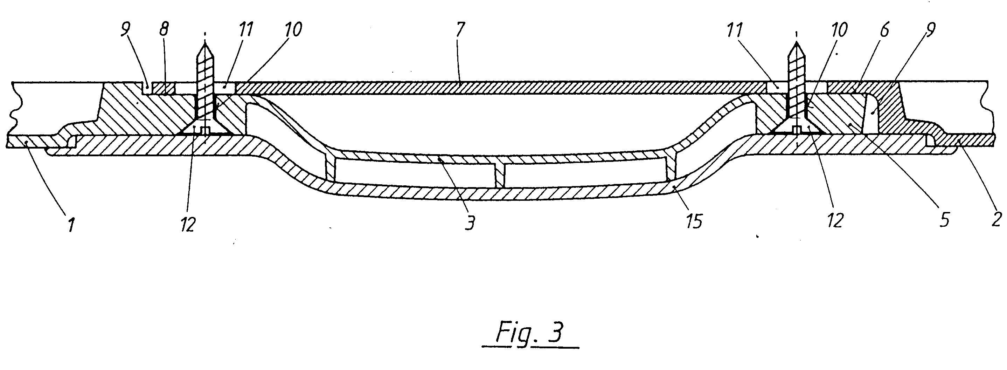

Das Ausführungsbeispiel nach Fig. 3 weist einen ähnlichen Grundaufbau wie das nach Fig. 1 und 2 auf, so daß auch insoweit die Bezugszeichen übereinstimmen. Der Hauptunterschied besteht darin, daß beim Ausführungsbeispiel nach Fig. 3 anstelle der Abdeckkappen 13 eine den Griffkörper 3 überspannende und daran über eine Klipsverbindung (oder Filmscharnier) gehaltene Griffkappe 15 vorgesehen ist.

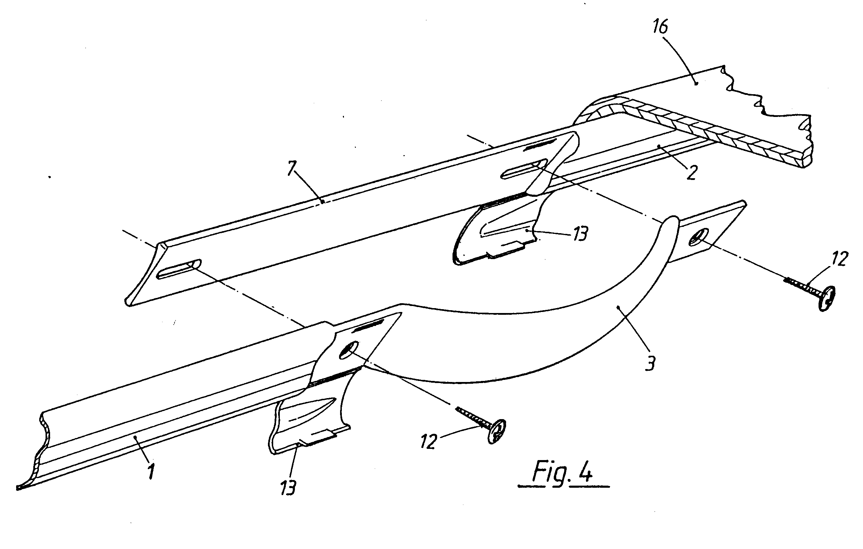

Fig. 4 zeigt eine Ausführungsform entsprechend der Fig. 1 und 2. Auch hier ist ein Teilbereich eines einen Dachhimmel 16 einfassenden Dachrahmens mit einem ersten Rahmenelement 1 und einem zweiten Rahmenelement 2 dargestellt. In axialer Verlängerung des ersten Rahmenelements 1 ist an diesem ein Griffkörper 3 angeformt, während in axialer Verlängerung des Rahmenelements 2 an diesem ein Steg 7 angeformt ist. An den Endbereichen des Griffkörpers 3 sind weiterhin Abdeckkappen 13 über Filmscharniere einstückig angeformt zwecks Abdeckung der Befestigungselemente 12 nach erfolgter Rahmenmontage.

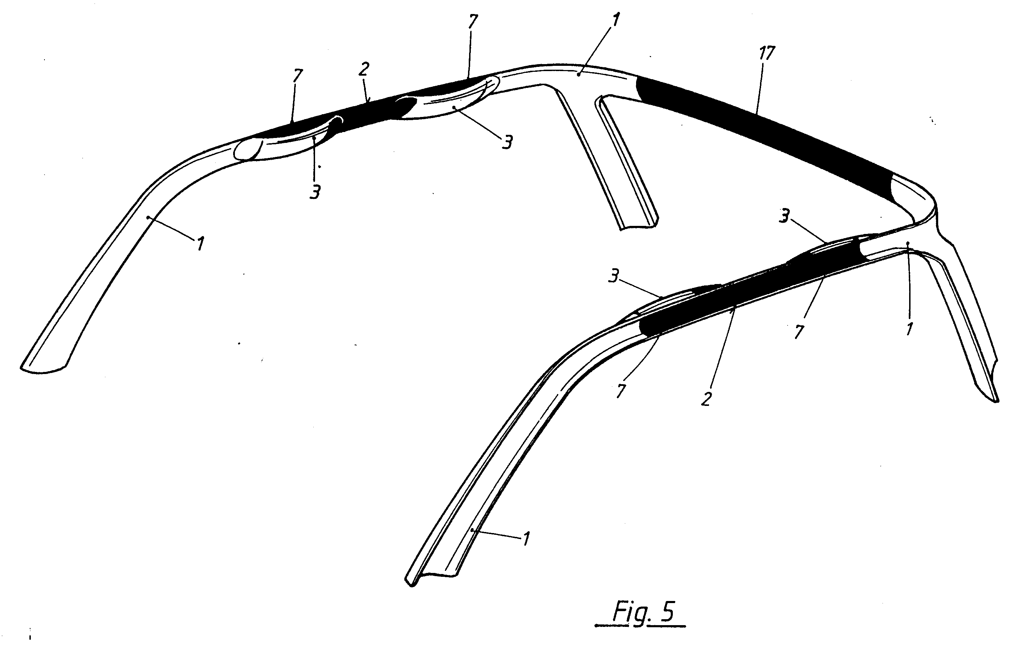

In Fig. 5 sind vier erste Rahmenelemente 1 mit daran angeformten Griffkörpern 3, zwei zweite Rahmenelemente 2, die an jedem Stirnende durch einen Steg 7 verlängert sind und ein als Verbindungsbrücke dienendes drittes Rahmenelement 17 als Einheit zusammengefügt. Wie aus Fig. 5 ersichtlich ist, können die ersten Rahmenelemente 1 durchaus unterschiedlich gestaltet und ggf. auch einstückig mit Fensterschlüsseln ausgeführt sein. Natürlich können auch die vorderen und hinteren Griffkörper 3 eines Fahrzeugs unterschiedlich gestaltet sein.

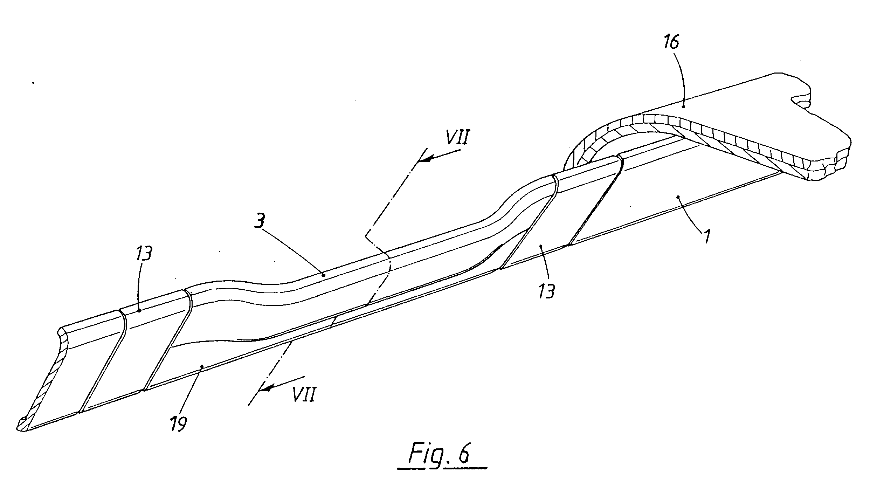

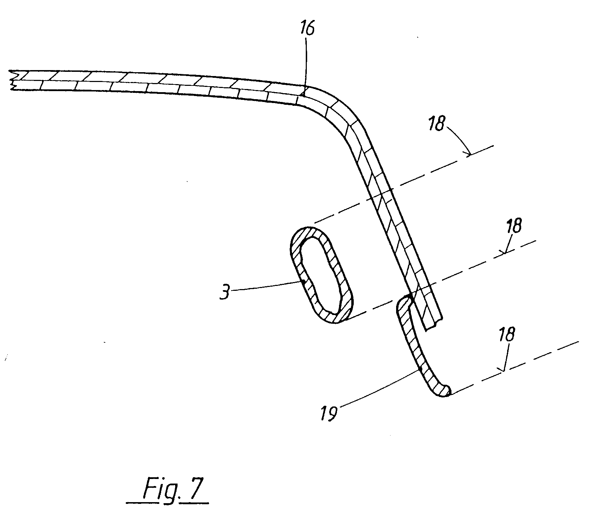

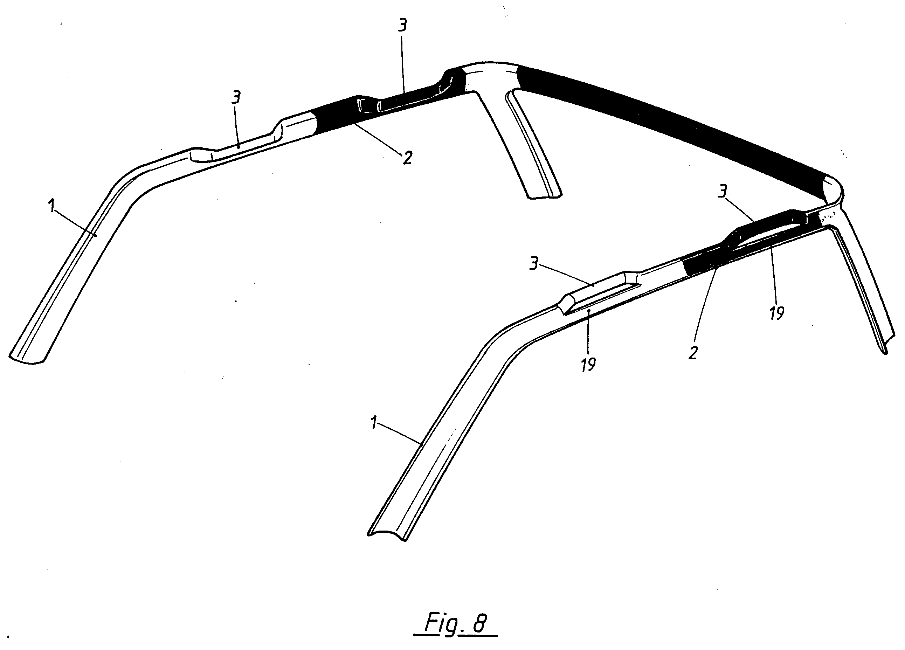

Bei der Ausführungsform nach Fig. 6, 7 und 8 ist jeweils an einem ersten Rahmenelement 1 und an einem zweiten Rahmenelement 2 ein kompletter Griffkörper 3 als Haltegriff einstückig angeformt. Ein Aneinandersetzen der Rahmenelemente 1 und 2 und der Ergänzungselemente nach Fig. 8 erfolgt in herkömmlicher Weise. In Fig. 7 ist mit gestrichelten Linien 18 das Auseinanderfahren der nicht dargestellten Werkzeughälften einer Kunststoff-Spritzgußvorrichtung angedeutet. Der gegenüber den Rahmenelementen 1, 2 schmalere Brückenteil 19 der Rahmenelemente 1 und 2 ist ausreichend breit zur Abdeckung des Rands des Dachhimmels 16 (vgl. Fig. 7). An den Endbereichen der Griffkörper 3 sind auch hier wieder Abdeckkappen 13 zwecks Abdeckung der hier vorgesehenen Befestigungsstellen angeformt.

## Patentansprüche

1. Dachrahmen für den Innenraumbereich von Fahrzeugen, aus mehreren aneinanderzusetzenden Rahmenelementen bestehend, dadurch gekennzeichnet, daß die Rahmenelemente (1, 2) als Kunststoff-Spritzgußteile ausgebildet sind, mit daran einstückig angeformten Griffkörpern (3).

2. Dachrahmen nach Anspruch 1, dadurch gekennzeichnet, daß im Verbindungsbereich zweier in Längsrichtung aneinandergesetzter Rahmenelemente (1, 2) eine Überlappungszone vorgesehen ist, die zum einen durch einen am ersten Rahmenelement (1) in axialer Verlängerung desselben angeformten bügelförmigen Griffkörper (3) und zum anderen durch einen am zweiten Rahmenelement (2) in axialer Verlängerung desselben angeformten Steg (7) gebildet ist, wobei der freie Endbereich des Griffkörpers (3) im Übergangsbereich vom zweiten Rahmenelement (2) zum Steg (7) auf dem zweiten Rahmenelement (2) abgestützt ist, während der freie Endbereich des Stegs (7) das erste Rahmenelement (1) im Übergangsbereich zum Griffkörper (3) untergreift.

3. Dachrahmen nach Anspruch 1 oder 2, dadurch gekennzeichnet, daß das erste Rahmenelement (1) im Übergangsbereich zum Griffkörper (3) eine Vertiefung (8) zur Aufnahme des freien Endbereichs des Stegs (7) aufweist und daß auch das zweite Rahmenelement (2) in dem den freien Endbereich des Griffkörpers (3) aufnehmenden Abstützbereich mit einer Vertiefung ausgebildet ist.

4. Dachrahmen nach wenigstens einem der Ansprüche 1 bis 3, dadurch gekennzeichnet, daß die Endbereiche des Griffkörpers (3) ebenso wie die von diesen übergriffenen Bereiche des zweiten Rahmenelements (2) mit miteinander fluchtende Durchgangsöffnungen (10, 11) zum Durchführen von Befestigungselementen (12) versehen sind.

5. Dachrahmen nach wenigstens einem der Ansprüchen 1 bis 4, dadurch gekennzeichnet, daß an den Endbereichen des Griffkörpers (3) jeweils über ein Filmscharnier eine Abdeckkappe (13) zur Abdeckung der Befestigungselemente (12) angeformt ist mit Rastausbildungen zur Festlegung an den Endbereichen des Griffkörpers (3).

6. Dachrahmen nach wenigstens einem der Ansprüche 1 bis 5, dadurch gekennzeichnet, daß derselbe ein mittleres Rahmenelement (2) aufweist, das an den beiden Enden durch angeformte Stege (7) axial verlängert ist, wobei die Stege (7) jeweils von an weiteren sich links und rechts am mittleren Rahmenelement (2) anschließenden Rahmenelementen (1) angeformten Griffkörpern (3) überspannt sind.

## Claims

1. Roof frame for the interior region of vehicles, consisting of a plurality of frame elements to be placed next to one another, characterized in that the frame elements (1, 2) are designed as injection-moulded plastic parts with handle bodies (3) moulded integrally onto them.

2. Roof frame according to Claim 1, characterized in that in the connecting region of two frame elements (1, 2) placed next to one another in the longitudinal direction there is provided an overlapping zone which is formed, on the one hand, by a bow-shaped handle body (3) moulded onto the first frame element (1) in an axial extension thereof, and, on the other hand, by a web (7) moulded onto the second frame element (2) in an axial extension thereof, the free end region of the handle body (3) being supported, in the transition region from the second frame element (2) to the web (7), on the second frame element (2), while the free end region of the web (7) engages under the first frame element (1) in the transition region to the handle body (3).

3. Roof frame according to Claim 1 or 2, characterized in that the first frame element (1) has, in the transition region to the handle body (3), a recess (8) for receiving the free end region of the web (7), and in that the second frame element (2), in that supporting region which receives the free end region of the handle body (3), is also designed with a recess.

4. Roof frame according to at least one of Claims 1 to 3, characterized in that the end regions of the handle body (3), similarly to those regions of the second frame element (2) over which the end regions engage, are provided with mutually aligning through openings (10, 11) for passing through fastening elements (12).

5. Roof frame according to at least one of Claims 1 to 4, characterized in that a covering cap (13) for covering the fastening elements (12) is moulded onto the end regions of the handle body (3), in each case via a film hinge, with latching constructions for securing it on the end regions of the handle body (3).

6. Roof frame according to at least one of Claims 1 to 5, characterized in that it has a central frame element (2) which is axially extended at both ends by moulded-on webs (7), the webs (7) each being spanned by handle bodies (3) moulded onto further frame elements (1) adjoining the central frame element (2) to the left and right.

## Revendications

1. Cadre de toit pour l'espace intérieur de véhicules, se composant de plusieurs éléments de cadre à assembler l'un à l'autre, caractérisé en ce que les éléments de cadre (1, 2) sont constitués par des pièces en matière plastique moulées par injection, avec des corps d'accrochage (3) formés d'un seul tenant.

2. Cadre de toit suivant la revendication 1, caractérisé en ce qu'il est prévu, dans la région de liaison entre deux éléments de cadre (1, 2) assemblés l'un à l'autre en direction longitudinale, une zone de chevauchement, qui est formée d'une part par un corps d'accrochage (3) recourbé formé sur un premier élément de cadre (1) dans le prolongement axial de celui-ci et d'autre part par une plaquette (7) formée sur le second élément de cadre (2) dans le prolongement axial de celui-ci, la région d'extrémité libre du corps d'accrochage (3) étant appuyée sur le second élément de cadre (2) dans la région de passage du second élément de cadre (2) à la plaquette (7), tandis que la région d'extrémité libre de la plaquette (7) maintient par le dessous le premier élément de cadre (1) dans la région de passage au corps d'accrochage (3).

3. Cadre de toit suivant la revendication 1 ou 2, caractérisé en ce que le premier élément de cadre (1) présente, dans la région de passage au corps d'accrochage (3), un creux (8) destiné à recevoir la région d'extrémité libre de la plaquette (7) et en ce que le second élément de cadre (2) est également configuré avec un creux dans la région de soutien recevant la région d'extrémité libre du corps d'accrochage (3).

4. Cadre de toit suivant au moins une des revendications 1 à 3, caractérisé en ce que les régions d'extrémité par le dessus du corps d'accrochage (3) ainsi que les régions du second élément de cadre (2) maintenues par celles-ci sont pourvues d'ouvertures de passage (10, 11) alignées l'une avec l'autre pour faire passer des éléments de fixation (12).

5. Cadre de toit suivant au moins une des revendications 1 à 4, caractérisé en ce qu'une coiffe de recouvrement (13) est formée au moyen d'une charnière pelliculaire sur les régions d'extrémité du corps d'accrochage (3), pour recouvrir les éléments de fixation (12), avec des moyens de clipsage pour la fixation aux régions d'extrémité du corps d'accrochage (3).

6. Cadre de toit suivant au moins une des revendications 1 à 5, caractérisé en ce que celui-ci présente un élément de cadre central (2), qui est prolongé axialement à ses deux extrémités par des plaquettes profilées (7), les plaquettes (7) étant recouvertes par des corps d'accrochage (3) formés sur d'autres éléments de cadre (1) se raccordant à gauche et à droite à l'élément de cadre central (2).
